# EUROPÄISCHE PATENTSCHRIFT

(11) **EP 3 560 671 B1**
(45) Veröffentlichungstag und Bekanntmachung des Hinweises auf die Patenterteilung: **30.12.2020**
(21) Anmeldenummer: 18169449.8
(22) Anmeldetag: 26.04.2018
(51) Int. Cl.: B29C 35/08, B29C 49/48, B29C 49/06, B29K 67/00

(54) **HEIZEINRICHTUNG EINER STRECKBLASMASCHINE**
HEATING DEVICE OF A STRETCH BLOWING MACHINE
DISPOSITIF DE CHAUFFAGE D'UNE MACHINE DE SOUFFLAGE-ÉTIRAGE

(43) Veröffentlichungstag der Anmeldung: 30.10.2019
(73) Patentinhaber: Kendrion Kuhnke Automation GmbH, 23714 Malente (DE)
(72) Erfinder: RAMM, Hauke, 24626 Groß Kummerfeld (DE); STEGELMANN, Jochen, 23684 Gronenberg / Scharbeutz (DE); PFEIFFER, Borgar, 24222 Schwentinental (DE)
(74) Vertreter: Seemann & Partner Patentanwälte mbB

(56) Entgegenhaltungen:
- EP-A2- 2 575 410
- WO-A1-2017/194639
- DE-A1- 19 802 855
- FR-A1- 2 816 237
- FR-A1- 2 867 939
- JP-A- 2011 098 514

## Beschreibung

Die Erfindung betrifft eine Heizeinrichtung einer Streckblasmaschine zur Herstellung von Kunststoffhohlkörpern sowie ein Verfahren zum Betreiben einer Streckblasmaschine. Ferner betrifft die Erfindung eine Streckblasmaschine zur Herstellung von Kunststoffhohlkörpern sowie eine Verwendung einer Heizeinrichtung.

Im Stand der Technik sind Blasmaschinen bzw. Streckblasmaschinen zur Blasumformung von Vorformlingen in Behälter bekannt. Hierbei werden bei einer Behälterformung durch Blasdruckeinwirkung Vorformlinge, die aus einem thermoplastischen Material bestehen, durch Expansion mittels Beaufschlagung von Druckluft in einer Form, die auch als Blasform bezeichnet wird, hergestellt.

Mit Hilfe der Blasform werden aus den Vorformlingen Behälter oder Kunststoffhohlkörper geblasen, die zur Aufnahme von flüssigen Produkten, wie z.B. Getränken oder anderen Produkten, geeignet sind.

Beispielsweise ist in DE 10 2016 113 875 A1 eine Blasmaschine beschrieben.

Aus FR 2 816 237 A1 ist eine Form zum Umformen von Kunststoff und/oder Verbundmaterialien bekannt, die einen Formkörper umfasst, der eine Vertiefung aufweist. Diese Form umfasst Heizmittel, die das umzuformende Material oder eine Zwischenoberfläche erhitzen, ohne dass es dabei auf die Wärmeleitfähigkeit des Formkörpers selbst ankommt.

Aus DE 198 02 855 A1 ist ein Verfahren zum Herstellen von hohlen, schalenförmigen oder flächigen Kunststoffformteilen bekannt, welche unter Verwendung eines thermoplastischen Verbundwerkstoffs mit einer Fasermatrix hergestellt werden. Dieses sogenannte Kompositgewebe dient als Ausgangsmaterial in einem Formwerkzeug und wird unter Hitzeeinwirkung geformt, plastifiziert und ausgehärtet. Das Kompositgewebe wird in dem Formwerkzeug gegen dessen Innenwände gepresst und erhält hierdurch seine bleibende Außenkontur. Als Ausgangsmaterial dient elektrisch leitendes Kompositgewebe, welche in das Formwerkzeug eingebracht wird. Das Kompositgewebe wird in dem Formwerkzeug induktiv erhitzt.

Die Aufgabe der Erfindung besteht darin, die Erwärmung von Blasformen zur Herstellung von Kunststoffhohlkörpern zu vereinfachen, wobei eine Heizeinrichtung einer Streckblasmaschine, ein Verfahren zum Betreiben der Streckblasmaschine mit einer solchen Heizeinrichtung, eine Streckblasmaschine mit einer solchen Heizeinrichtung sowie die Verwendung einer Heizeinrichtung angegeben werden soll und diese Heizeinrichtung eine verbesserte Lebensdauer aufweisen soll.

Gelöst wird diese Aufgabe durch eine Heizeinrichtung einer Streckblasmaschine zur Herstellung von Kunststoffhohlkörpern mit einer einen Hohlraum aufweisenden Werkzeugform und einer die Werkzeugform umgebenden Außenform für die Werkzeugform, wobei die Außenform wenigstens eine oder mehrere Induktoren aufweist, wobei der wenigstens eine Induktor oder die Induktoren mit einem Induktionsgenerator zur Ansteuerung des oder der Induktoren verbunden ist, dadurch gekennzeichnet, dass der wenigstens eine oder die mehreren Induktoren jeweils eine ringförmige Spule aufweisen, wobei die Spule zwischen einem Kern und einem Ringkörper angeordnet ist, und der Kern und der Ringkörper Magnetfeldausrichtkörper sind, die Ferritmaterial aufweisen und ringförmig oder rohrförmig ausgebildet sind, und wobei der Kern und der Ringkörper über eine scheibenförmig oder plattenförmig ausgebildete Bodenplatte als weiterer Magnetfeldausrichtkörper verbunden sind.

Die Erfindung beruht auf dem Gedanken, eine induktive Heizeinrichtung für eine Werkzeugform, die auch als Blasform bezeichnet wird, bereitzustellen, so dass mittels der induktiven Heizeinrichtung es möglich ist, die Werkzeugform direkt auf induktive Weise zu beheizen. Hierbei ist die Werkzeugform von einer Außenform umgeben, so dass durch die Erzeugung eines Wechselmagnetfeldes mittels der Induktoren der Außenform das Wechselmagnetfeld die elektrisch leitfähige Werkzeugform durchdringt und dadurch Wärme in der Werkzeugform erzeugt wird. Durch das elektromagnetische Wechselfeld der Induktoren bei Beaufschlagung der Induktionsspulen der Induktoren mit Wechselspannung werden in der Werkzeugform Wirbelströme induziert und Ummagnetisierung erzeugt, wobei aufgrund von Ummagnetisierungsverlusten und von ohmschen Verlusten durch die Wirbelströme die in die Werkzeugform übertragene Leistung in Wärme umgewandelt wird, wodurch eine Erwärmung der Werkzeugform bewirkt wird.

Im Gegensatz zum Stand der Technik, bei dem die Werkzeugformen mittels der Durchführung von warmen Flüssigkeiten, wie z.B. Wasser oder Öl, durch die Werkzeugform in entsprechenden Kanälen, ist bei der erfindungsgemäßen Heizeinrichtung eine direkte, elektrische Beheizung ermöglicht, wodurch eine Vereinfachung im Aufbau erreicht wird. Darüber hinaus ist es mittels der erfindungsgemäßen Heizeinrichtung möglich, einzelne oder mehrere Segmente der Werkzeugform differenziert bzw. unterschiedlich zu beheizen.

Hierbei weist die Heizeinrichtung, insbesondere Induktionsheizeinrichtung, einen Induktionsgenerator auf, mittels dem der oder die Induktoren angesteuert und mit einer Wechselspannung beaufschlagt werden. Hierbei speist der Induktionsgenerator den oder die Induktoren mit einem Wechselstrom. Die Induktoren sind hierbei außerhalb der zu beheizenden Werkzeugform angeordnet, so dass das magnetische Wechselfeld in Richtung der zu beheizenden Werkzeugform gerichtet ist, wodurch in der metallischen Werkzeugform die Wärme durch die magnetischen Wechselfelder der Induktoren erzeugt wird.

Dazu ist in einer Ausführungsform der Heizeinrichtung vorgesehen, dass mehrere Induktoren seriell oder parallel geschaltet sind.

Darüber hinaus ist gemäß einem weiteren Aspekt der Heizeinrichtung vorteilhafterweise vorgesehen, dass mehrere Gruppen von seriell geschalteten Induktoren parallel geschaltet sind.

Durch die serielle oder parallele Schaltung von Induktoren oder von Gruppen von Induktoren ist es möglich, verschiedene Bereiche oder einzelne Segmente der Werkzeugform selektiv zu erwärmen, wodurch ein vorbestimmter Temperaturgradient innerhalb der Werkzeugform ausgebildet ist.

Hierbei ist es im Rahmen der Erfindung vorgesehen, dass Gruppen von seriell geschalteten Induktoren einzeln angesteuert werden, wodurch einzelne Segmente der Werkzeugform erwärmt werden. Sind Gruppen von seriell geschalteten Induktoren parallel geschaltet, die über einen Generatorausgang angesteuert werden, wird eine vollständige Erwärmung der Werkzeugform erreicht. Im Rahmen der Erfindung ist es in einer Ausgestaltung vorgesehen, dass die Induktoren auch einzeln angesteuert werden.

Des Weiteren zeichnet sich eine Weiterbildung der Heizeinrichtung dadurch aus, dass die Induktoren in regelmäßigen Abständen zueinander in Aufnahmen der Außenform für die Induktoren angeordnet sind.

Außerdem ist es bei der Heizeinrichtung bevorzugt, dass die Werkzeugform und die Außenform für die Werkzeugform formschlüssig angeordnet sind oder dass die Werkzeugform und die Außenform für die Werkzeugform in einem konstanten Abstand voneinander beabstandet sind, wobei insbesondere der Abstand der Werkzeugform und der Außenform zwischen 0,1 cm bis 1,0 cm, insbesondere 0,1 cm bis 0,5 cm, beträgt. Vorzugsweise ist der Abstand zwischen der Außenform und der Werkzeugform konstant. Insbesondere ist der Abstand zwischen der Außenform und der Werkzeugform konstant.

Insbesondere ist bei der Heizeinrichtung weiterhin vorgesehen, dass die Werkzeugform aus Stahl, insbesondere Edelstahl, hergestellt ist oder dass die Werkzeugform eine aus Stahl, insbesondere Edelstahl, bestehende Außenhülle aufweist. Dadurch ist es beispielsweise möglich, dass die Werkzeugform eine Außenhülle aus Stahl oder Edelstahl aufweist, die eine Werkzeuginnenform aus Aluminium oder einem anderen Metall umgibt, so dass eine zwei- oder mehrteilige Werkzeugform bereitgestellt wird.

Überdies ist gemäß einer bevorzugten Ausführungsform bei der Heizeinrichtung vorgesehen, dass die Induktoren mittels des Induktorgenerators einzeln angesteuert werden oder ansteuerbar sind und/oder dass mehrere Induktoren mittels des Induktorgenerators gleichzeitig angesteuert werden oder ansteuerbar sind und/oder dass die Induktoren mittels des Induktorgenerators derart angesteuert werden oder ansteuerbar sind, dass entlang der Längserstreckung und/oder in Umfangsrichtung der Werkzeugform ein vorbestimmter Temperaturgradient ausgebildet wird oder ist.

Ferner wird die Erfindung gelöst durch ein Verfahren zum Betreiben einer Streckblasmaschine zur Herstellung von Kunststoffhohlkörpern in Werkzeugformen mit einer voranstehend beschriebenen erfindungsgemäßen induktiven Heizeinrichtung. Zur Vermeidung von Wiederholungen wird auf die obige Ausführung ausdrücklich verwiesen.

Außerdem wird die Aufgabe gelöst durch eine Streckblasmaschine zur Herstellung von Kunststoffhohlkörpern mit einer erfindungsgemäßen Heizeinrichtung.

Eine weitere Lösung erfolgt durch eine Verwendung einer Heizeinrichtung, wie voranstehend beschrieben, in einer Streckblasmaschine zur Herstellung von Kunststoffhohlkörpern.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch einen Querschnitt durch eine erfindungsgemäße Blasform für einen Vorformling im Ausschnitt;
- Fig. 2: schematisch einen Querschnitt durch eine Außenform der Blasform;
- Fig. 3: schematisch eine weitere perspektivische Darstellung der Außenform;
- Fig. 4: schematisch eine perspektivische Ansicht eines Induktors in der Außenform in einem Ausschnitt und
- Fig. 5: schematisch einen Querschnitt durch einen Induktor für die Außenform gemäß einer weiteren Ausführungsform.

In den Zeichnungen sind jeweils gleiche oder gleichartige Elemente und/oder Teile mit denselben Bezugsziffern versehen, so dass von einer erneuten Vorstellung jeweils abgesehen wird.

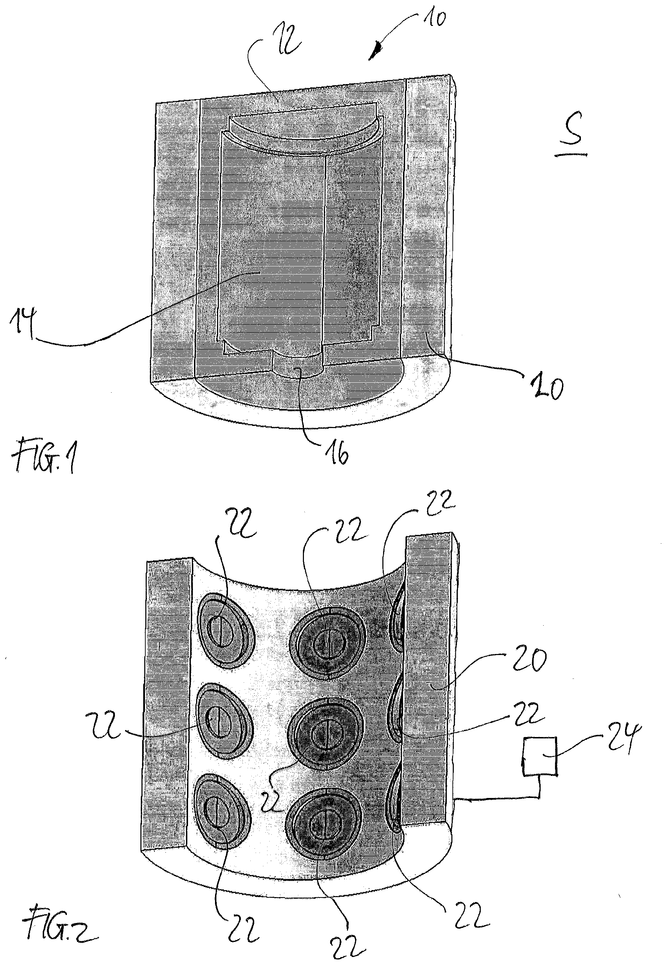

In Fig. 1 ist schematisch der Querschnitt durch eine Blasform 10 für in die Blasform 10 einsetzbare Vorformlinge in einer perspektivischen Ansicht gezeigt. Hierbei ist in Fig. 1 eine Hälfte der Blasform 10 gezeigt, die der Herstellung von Kunststoffbehältern aus einem Vorformling an einer schematisch bezeichneten Streckblasmaschine S eingesetzt wird.

Hierzu weist die Blasform 10 eine Formhälfte 12 auf, die im Inneren einen Hohlraum 14 zur Aufnahme eines Vorformlings aufweist. In den Hohlraum 14 wird durch eine unterseitige Öffnung 16 der Formhälfte 12 ein Vorformling eingebracht. Vorzugsweise besteht hierbei der (hier nicht dargestellte) Vorformling aus einem thermoplastischen Material, wie zum Beispiel Polyethylenterephthalat (PET). Zum Blasformen des eingesetzten Vorformlings wird Formhälfte 12 zusammen mit einer weiteren (baugleichen) Formhälfte geschlossen.

Die Formhälfte 12 weist eine zylindrische Außenfläche auf, die von einer Außenform 20 der Blasform umgeben ist. Die Außenform 20 ist hierbei mit einer erfindungsgemäßen induktiven Heizung für die Formhälfte 12 ausgebildet.

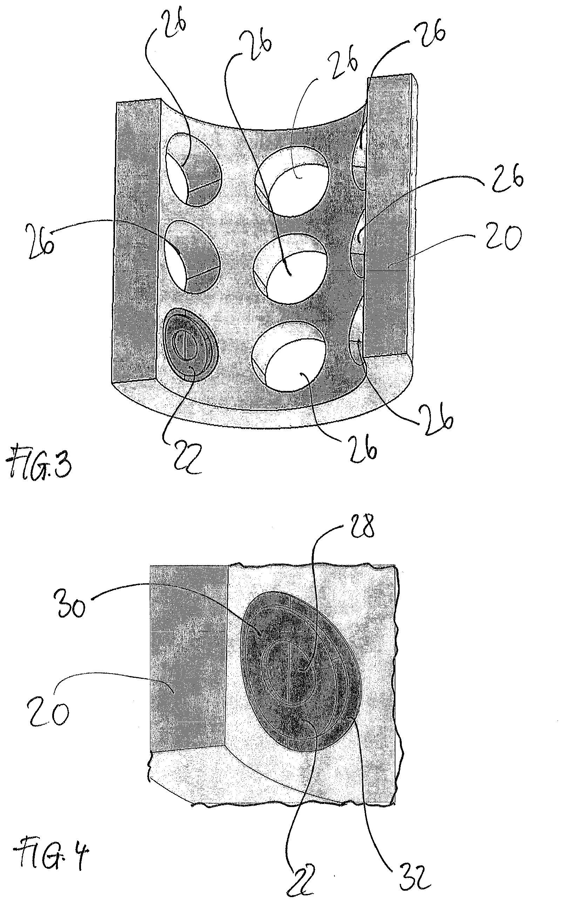

In den Fig. 2 und 3 sind jeweils perspektivische Ansichten der Außenform unter Weglassung der Formhälfte 12 schematisch gezeigt. Die Außenform 20 weist eine zylindermantelartige Form auf, wobei in Fig. 2 und 3 jeweils nur eine Hälfte dargestellt ist.

Aus Fig. 3 ist ersichtlich, dass die Außenform 20 mehrere Aufnahmen 26 aufweist, in die Induktoren 22 eingesetzt sind. Fig. 2 zeigt die Ausbildung der Außenform 20 mit den in den Aufnahmen 26 angeordneten Induktoren 22. Hierbei sind die Induktoren 22 in regelmäßigen Abständen in der Außenform angeordnet.

Um die Induktoren 22 mit Wechselstrom zu beaufschlagen, ist ein Induktionsgenerator 24 vorgesehen (vgl. Fig. 2), der mit den Induktoren 22 verbunden ist. Der Induktionsgenerator 24 ist hierbei zur Ansteuerung der Induktoren 22 vorgesehen, wodurch aufgrund des vom Induktionsgenerator 24 bereitgestellten Wechselstroms mittels der Induktoren 22 ein Magnetfeld bzw. ein Wechselmagnetfeld erzeugt wird.

Mittels der an der als Werkzeugform ausgebildeten Formhälfte 12 angeordneten Induktoren 22 (vgl. Fig. 1) werden in der Formhälfte 12 Wirbelströme induziert, so dass durch die Wirbelströme die in die Formhälfte 12 übertragene Leistung in Wärme umgewandelt wird. Hierzu ist die Formhälfte 12 aus Stahl, vorzugsweise aus Edelstahl, hergestellt. In einer weiteren Ausgestaltung kann die Formhälfte 12 auch eine aus Stahl oder Edelstahl bestehende Außenhülle aufweisen, die aufgrund der Induktionswärme erwärmt wird.

Die Induktoren 22 können in einer Ausgestaltung seriell oder parallel geschaltet sein, wobei die Induktoren 22 hierbei mit dem Induktionsgenerator 24 verbunden sind. In einer Ausgestaltung können hierbei Gruppen von seriell geschalteten Induktoren 22 jeweils zu einer anderen Gruppe von seriell angeordneten Induktoren 22 parallel geschaltet sein, wodurch es möglich ist, infolge der Ansteuerung durch den Induktionsgenerator 24 einzelne Segmente in der Formhälfte 12 gezielt zu erwärmen.

In Fig. 4 ist im Ausschnitt eine perspektivische Ansicht eines Induktors 22 gezeigt, der in der Außenform 20 angeordnet ist. Der Induktor 22 weist hierbei einen ringförmigen Kern 28 auf, der von einer ringförmigen Induktionsspule 30 umgeben ist. Die Induktionsspule 30 ist ferner mit dem Induktionsgenerator 24 verbunden.

Die Induktionsspule 30 ist ferner von einem Ringkörper 32 umgeben, wobei der Ringkörper 32 und der Kern 28 Ferritmaterial oder Ferrite aufweisen, wodurch der Kern 28 und der Ringkörper 32 als Magnetfeldausrichtkörper ausgerichtet sind, so dass das von der Induktionsspule 30 erzeugte magnetische Wechselfeld in Richtung der von der Außenform 20 ummantelten Formhälfte 12 gerichtet ist.

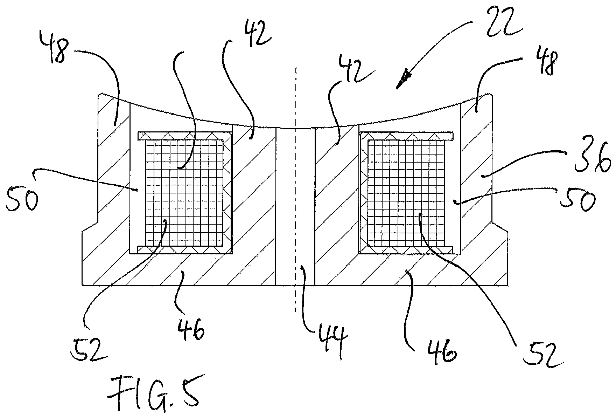

In Fig. 5 ist ein schematischer Querschnitt durch einen Induktor 22 gemäß einer weiteren Ausführungsform gezeigt. Der Induktor 22 weist einen Ferritkörper 36 auf, der einen inneren zylindrischen Kern 42, der eine durchgehende hohlzylindrische Durchbrechung 44 als Mittelloch umgibt, sowie einen äußeren Ringkörper 48 aufweist, wobei der innere zylindrische Kern 42 mit dem äußeren Ringkörper 48 mittels einer Bodenplatte 46 des Ferritkörpers 36 verbunden ist. In die Durchbrechung 44 kann zur Befestigung des Induktors 22 in der Außenform ein Befestigungsmittel, wie z.B. eine Schraube oder dergleichen eingebracht werden.

Mittels des inneren zylindrischen Kerns 42, der Bodenplatte 46 und dem äußeren Ringkörper 48 wird eine ringförmige Aufnahme 50 des Ferritkörpers 36 ausgebildet, in der eine ringförmige Spule 52 mit Wicklungen aufgenommen bzw. angeordnet ist. Die ringförmige Aufnahme 50 weist hierbei im Querschnitt eine U-förmige Form auf.

Der äußere Ringkörper 48 und der damit verbundene zylindrische Kern 42 des Induktors 22 sind auf der der Werkzeugform zugewandten Seite jeweils mit einer, vorzugsweise kreisbogenförmigen, Krümmung ausgebildet, so dass der Induktor 22 formkomplementär zur, vorzugsweise gekrümmten, Außenseite der Werkzeugform, die dem Induktor 22 zugewandt ist, ausgebildet ist.

In Ausgestaltungen des Induktors 22 kann der Ferritkörper 36 einteilig oder mehrteilig ausgeführt sein.

Im Rahmen der Erfindung sind Merkmale, die mit "insbesondere" oder "vorzugsweise" gekennzeichnet sind, als fakultative Merkmale zu verstehen.

### Bezugszeichenliste

- 10: Blasform
- 12: Formhälfte
- 14: Hohlraum
- 16: Öffnung
- 20: Außenform
- 22: Induktor
- 24: Induktionsgenerator
- 26: Aufnahme
- 28: Kern
- 30: Induktionsspule
- 32: Ringkörper
- 36: Ferritkörper
- 42: innerer zylindrischer Kern
- 44: Durchbrechung
- 46: Bodenplatte
- 48: äußerer Ringkörper
- 50: Aufnahme
- 52: ringförmige Spule

- S: Streckblasmaschine

## Patentansprüche

1. Heizeinrichtung einer Streckblasmaschine zur Herstellung von Kunststoffhohlkörpern mit einer einen Hohlraum (14) aufweisenden Werkzeugform (12) und einer die Werkzeugform (12) umgebenden Außenform (20) für die Werkzeugform (12), wobei die Außenform (20) wenigstens eine oder mehrere Induktoren aufweist, wobei der wenigstens eine Induktor (22) oder die Induktoren (22) mit einem Induktionsgenerator (24) zur Ansteuerung des oder der Induktoren (22) verbunden ist, **dadurch gekennzeichnet, dass** der wenigstens eine oder die mehreren Induktoren (22) jeweils eine ringförmige Spule (30) aufweisen, wobei die Spule (30) zwischen einem Kern (28) und einem Ringkörper (32) angeordnet ist, und der Kern (28) und der Ringkörper (32) Magnetfeldausrichtkörper (28, 32) sind, die Ferritmaterial aufweisen und ringförmig oder rohrförmig ausgebildet sind, und wobei der Kern (28) und der Ringkörper (32) über eine scheibenförmig oder plattenförmig ausgebildete Bodenplatte (46) als weiterer Magnetfeldausrichtkörper verbunden sind.

2. Heizeinrichtung nach Anspruch 1, **dadurch gekennzeichnet, dass** mehrere Induktoren (22) seriell oder parallel geschaltet sind.

3. Heizeinrichtung nach Anspruch 1, **dadurch gekennzeichnet, dass** mehrere Gruppen von seriell geschalteten Induktoren (22) parallel geschaltet sind.

4. Heizeinrichtung nach einem der Ansprüche 1 bis 3, **dadurch gekennzeichnet, dass** die Induktoren (22) in regelmäßigen Abständen zueinander in Aufnahmen (26) der Außenform (20) für die Induktoren (22) angeordnet sind.

5. Heizeinrichtung nach einem der Ansprüche 1 bis 4, **dadurch gekennzeichnet, dass** die Werkzeugform (12) und die Außenform (20) für die Werkzeugform (12) formschlüssig angeordnet sind oder die Werkzeugform (12) und die Außenform (20) für die Werkzeugform (12) in einem konstanten Abstand voneinander beabstandet sind, wobei insbesondere der Abstand der Werkzeugform (12) und der Außenform (20) zwischen 0,1 cm bis 1,0 cm, insbesondere 0,1 cm bis 0,5 cm, beträgt.

6. Heizeinrichtung nach einem der Ansprüche 1 bis 5, **dadurch gekennzeichnet, dass** die Werkzeugform (12) aus Stahl, insbesondere Edelstahl, hergestellt ist oder dass die Werkzeugform (12) eine aus Stahl, insbesondere Edelstahl, bestehende Außenhülle aufweist.

7. Heizeinrichtung nach einem der Ansprüche 1 bis 6, **dadurch gekennzeichnet, dass** die Induktoren (22) mittels des Induktorgenerators einzeln angesteuert werden oder ansteuerbar sind und/oder dass mehrere Induktoren (22) mittels des Induktorgenerators gleichzeitig angesteuert werden oder ansteuerbar sind und/oder dass die Induktoren (22) mittels des Induktorgenerators derart angesteuert werden oder ansteuerbar sind, dass entlang der Längserstreckung und/oder in Umfangsrichtung der Werkzeugform (12) ein vorbestimmter Temperaturgradient ausgebildet wird oder ist.

8. Streckblasmaschine zur Herstellung von Kunststoffhohlkörpern mit einer Heizeinrichtung nach einem der Ansprüche 1 bis 7.

9. Verfahren zum Betreiben einer Streckblasmaschine mit einer Heizeinrichtung nach einem der Ansprüche 1 bis 7.

10. Verwendung einer Heizeinrichtung nach einem der Ansprüche 1 bis 7 in einer Streckblasmaschine zur Herstellung von Kunststoffhohlkörpern.

## Claims

1. A heating device of a stretch blowing machine and for producing hollow plastic bodies with a tool mold (12) having a cavity (14) and an outer mold (20) surrounding the tool mold (12) for the tool mold (12), wherein the outer mold (20) has at least one or more inductors, wherein the at least one inductor (22) or the inductors (22) is/are connected to an induction generator (24) in order to actuate the inductor(s) (22), **characterized in that** the at least one or the multiple inductors (22) each have an annular coil (30), wherein the coil (30) is arranged between a core (28) and an annular body (32), and the core (28) and the annular body (32) are magnetic field orienting bodies (28, 32) which have ferritic material and have an annular or tubular configuration, and wherein the core (28) and the annular body (32) are connected via a base plate (46) having a disk-shaped or plate-shaped configuration as a further magnetic field orienting body.

2. The heating device according to Claim 1, **characterized in that** multiple inductors (22) are connected in series or in parallel.

3. The heating device according to Claim 1, **characterized in that** multiple groups of series-connected inductors (22) are connected in parallel.

4. The heating device according to any one of Claims 1 to 3, **characterized in that** the inductors (22) are arranged at regular distances from one another in receptacles (26) of the outer mold (20) for the inductors (22).

5. The heating device according to any one of Claims 1 to 4, **characterized in that** the tool mold (12) and the outer mold (20) for the tool mold (12) are arranged with a positive fit or the tool mold (12) and the outer mold (20) for the tool mold (12) are spaced apart from one another at a constant distance, wherein in particular the distance of the tool mold (12) and the outer mold (20) is between 0.1 cm and 1.0 cm, in particular is 0.1 cm to 0.5 cm.

6. The heating device according to any one of Claims 1 to 5, **characterized in that** the tool mold (12) is produced from steel, in particular stainless steel, or the tool mold (12) has an outer shell consisting of steel, in particular stainless steel.

7. The heating device according to any one of Claims 1 to 6, **characterized in that** the inductors (22) are or can be individually actuated by means of the inductor generator and/or multiple inductors (22) are or can be simultaneously actuated by means of the inductor generator and/or the inductors (22) are or can be actuated by means of the inductor generator such that a predetermined temperature gradient is or will be configured along the longitudinal extension and/or in the circumferential direction of the tool mold (12).

8. A stretch blowing machine for producing hollow plastic bodies having a heating device according to any one of Claims 1 to 7.

9. A method for operating a stretch blowing machine having a heating device according to any one of Claims 1 to 7.

10. Use of a heating device according to any one of Claims 1 to 7 in a stretch blowing machine for producing hollow plastic bodies.

## Revendications

1. Dispositif de chauffage d'une machine de soufflage-étirage pour la fabrication de corps creux en matière plastique avec un moule-outillage (12) présentant une cavité (14) et un moule extérieur (20) pour le moule-outillage (12), entourant le moule-outillage (12), le moule extérieur (20) présentant au moins un ou plusieurs inducteurs, lesdits au moins un inducteurs (22) ou les inducteurs (22) étant reliés à un générateur inducteur (24) pour la commande du ou des inducteurs (22), **caractérisé en ce que** ledit au moins un inducteur ou lesdits inducteurs (22) ont chacun une bobine annulaire (30), la bobine (30) étant disposée entre un noyau (28) et un corps annulaire (32), et le noyau (28) et le corps annulaire (32) sont des corps (28, 32) d'alignement de champ magnétique qui sont constitués d'un matériau en ferrite et qui présentent une forme annulaire ou tubulaire, le noyau (28) et le corps annulaire (32) étant reliés par une plaque de base (46) en forme de disque ou de plaque en tant qu'autre corps d'alignement du champ magnétique.

2. Dispositif de chauffage selon la revendication 1, **caractérisé en ce qu'**une pluralité d'inducteurs (22) sont connectés en série ou en parallèle.

3. Dispositif de chauffage selon la revendication 1, **caractérisé en ce que** plusieurs groupes d'inducteurs (22) connectés en série sont connectés en parallèle.

4. Dispositif de chauffage selon l'une des revendications 1 à 3, **caractérisé en ce que** les inducteurs (22) sont disposés à intervalles réguliers les uns par rapport aux autres dans des réceptacles (26) du moule extérieur (20) pour les inducteurs (22).

5. Dispositif de chauffage selon l'une des revendications 1 à 4, **caractérisé en ce que** le moule-outillage (12) et le moule extérieur (20) pour le moule-outillage (12) sont disposés avec liaison par coopération de formes ou le moule-outillage (12) et le moule extérieur (20) pour le moule-outillage (12) sont espacés l'un de l'autre à une distance constante, la distance entre le moule-outillage (12) et le moule extérieur (20) étant notamment comprise entre 0,1 cm et 1,0 cm, en particulier entre 0,1 cm et 0,5 cm.

6. Dispositif de chauffage selon l'une des revendications 1 à 5, **caractérisé en ce que** le moule-outillage (12) est en acier, notamment en acier inoxydable, ou **en ce que** le moule-outillage (12) présente une coque extérieure en acier, en particulier en acier inoxydable.

7. Dispositif de chauffage selon l'une des revendications 1 à 6, **caractérisé en ce que** les inducteurs (22) sont commandés ou aptes à être commandés individuellement au moyen du générateur inducteur et/ou **en ce que** plusieurs inducteurs (22) sont commandés ou aptes à être commandés simultanément au moyen du générateur inducteur et/ou **en ce que** les inducteurs (22) sont commandés ou aptes à être commandés au moyen du générateur inducteur de telle sorte qu'un gradient de température prédéterminé est formé ou apte à être formé le long de l'étendue longitudinale et / ou dans la direction circonférentielle du moule-outillage (12).

8. Machine de soufflage-étirage pour la production de corps creux en matière plastique avec un dispositif de chauffage selon l'une des revendications 1 à 7.

9. Procédé pour faire fonctionner une machine de soufflage-étirage avec un dispositif de chauffage selon l'une des revendications 1 à 7.

10. Utilisation d'un dispositif de chauffage selon l'une des revendications 1 à 7 dans une machine de soufflage-étirage pour la production d'articles creux en matière plastique.
